# EUROPEAN PATENT APPLICATION

(11) **EP 3 135 349 A1**
(43) Date of publication of application: **01.03.2017**
(21) Application number: 15764754.6
(22) Date of filing: 20.03.2015
(51) Int. Cl.: A63B 69/00

(54) **DEVICE TO PRACTICE BALL KICK-UPS**

(30) Priority: 20.03.2014 ES 201430371
(71) Applicant: Pass Ball S.L., 08840 Barcelona (ES)
(72) Inventor: MANZANO SANTAELLA, Andrés, E-08840 Barcelona (ES); RANSBURY, Terrance, E-08840 Barcelona (ES); ISERN PUJOL, Alejandro, E-08840 Barcelona (ES)
(74) Representative: Balder IP Law, S.L.
(86) International application number: PCT/ES2015/070202
(87) International publication number: WO 2015/140385

(57) **Abstract**

The invention relates to a device (10) for practicing ball kick-ups (17), comprising a bearing base (11), a vertical rotational axis (Γ), an arm (13) that is rotatably mounted on said axis (Γ), a ball (17) attached at the end of the arm (13), characterized in that the arm (13) consists of a first profile having a first section (4) that is substantially circular or elliptical, the first edge (5) or lower edge thereof being provided with means for attaching to the axis (Γ), and the second edge (6) or upper edge thereof being aligned with the axis (Γ) and constituting the highest point of the arm (13); and a second section (7) tangent to the first section (4) such as to be located on the other side of the rotational axis (Γ), relative to the first section (4), the ball (17) being attached to the other end of the second section (7), so as to be raised relative to the bottom surface of the base (11).

## Description

### TECHNICAL FIELD

The present invention relates to the teaching and training of kicking and controlling a ball such as a soccer ball. The invention provides a device that returns the ball to the player when they kick it, enabling technique to be improved through repetition. The device is designed so that the ball carries out a circular movement, providing feedback both in terms of quality and number of kicks carried out.

### BACKGROUND OF THE INVENTION

Devices for practicing ball kick-ups are known that comprise a bearing base, a vertical rotational axis, an arm that is rotatably mounted on said axis and a ball attached to the end of the arm.

Examples of devices like these are described in US7527567 and US7811183.

However, the devices described are complex and have many components, which makes them expensive and, in addition, when they are disassembled they take up a lot of space, which is a drawback with regards to the transport, presentation and storage thereof.

### DESCRIPTION OF THE INVENTION

In order to overcome the shortfalls of the state of the art, the present invention proposes a device for practicing ball kick-ups, comprising a bearing base, a vertical rotational axis, an arm that is rotatably mounted on said axis, a ball attached to the end of the arm, which is characterized in that the arm consists of a first profile having a first section that is substantially circular or elliptical, the first edge or lower edge thereof being provided with means for attaching to the axis, and the second edge or upper edge thereof being aligned with the axis and constituting the highest point of the arm; and a second section tangent to the first section such as to be located on the other side of the rotational axis, relative to the first section, the ball being attached to the other end of the second section, so as to be raised relative to the bottom surface of the base.

According to several optional characteristics of the invention, which may be combined provided that it is technically possible:
- the device comprises a curved reinforcement profile with a greater curvature than the first section of the first profile, this reinforcement profile being internally connected to the lower and upper edges of the first section;
- the reinforcement profile is arranged on the vertical plane that contains the arm and on the same side as the first section with respect to the axis;
- the ball is integral to the arm;
- the upper edge of the first section has means for being fitted onto the axis, such that it is possible to arrange the arm upside down to obtain a different ball height;
- the second section has a bending point in the middle portion thereof, such that the arm has an overall question mark shape;
- the profiles have a rectangular cross section that is 25 mm wide and 6 mm high;
- the center of gravity of the ball and arm assembly is arranged close to the axis;
- the center of the ball is located between 40 and 50 cm away from the axis and between 12 and 18 cm away from the bottom surface of the base;
- the bottom of the base comprises non-slip legs;
- the arm is a metal, laminated wood, plastic or composite material profile;
- the base is metal, wood, plastic or a composite material;
- the device comprises a turn counter and a stopwatch, means for determining the turns or back-and-forth movements of the arm per unit time, and means for displaying these turns or back-and-forth movements per unit time.

### BRIEF DESCRIPTION OF THE DRAWINGS

For the purpose of helping to make the foregoing description more readily understandable, it is accompanied by a set of drawings that, schematically and by way of illustration and not limitation, represent practical embodiments.
Fig. 1A is a perspective view of the soccer training device in accordance with an embodiment of the present invention;
Fig. 1B is a perspective view of a second embodiment of the soccer training device containing an additional articulation mechanism to increase the range of movement;

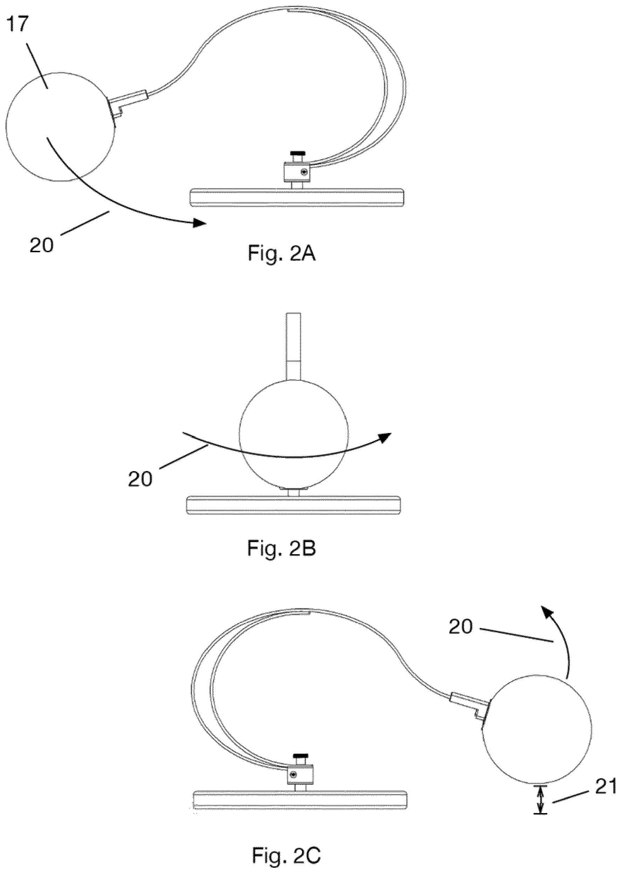

Fig. 2 is a sequence view of the device showing the rotational movement;
Fig. 3A is a side view showing the rocking movement that is used to give negative feedback when the ball is not kicked in the center;
Fig. 3B is a side view of the embodiment of the device in figure 1B and shows both the ball height adjustment and the additional movement above ground level;
Fig. 4 is a perspective view showing alternative mechanisms to adjust the ball height;

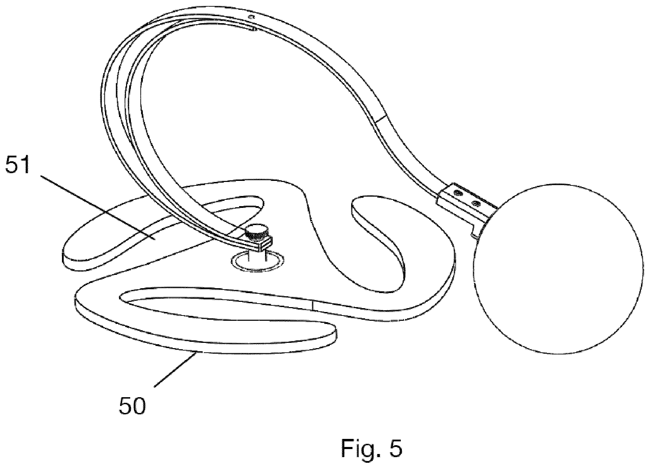

Fig. 5 is a perspective view showing an alternative base to achieve greater adjustment on the playing field (soccer field);
Fig. 6A and 6B are cross sections that illustrate a detailed view of the rotational attachment between the ball and the arm.
Fig. 7 is an upper view showing an embodiment of the user interface of the present invention. The mode selection, repetition counter, time and battery indication functions are shown.

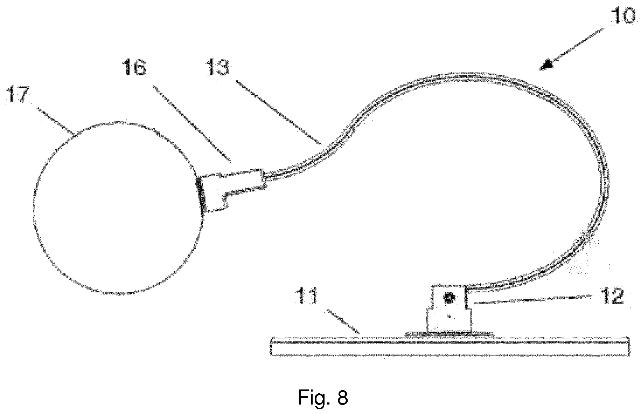

Fig. 8 shows an embodiment wherein the arm does not have additional supports.

### DESCRIPTION OF AN EMBODIMENT OF THE INVENTION

Drawings 1 to 8 show different embodiments of the main components needed to develop the proposed soccer training device.

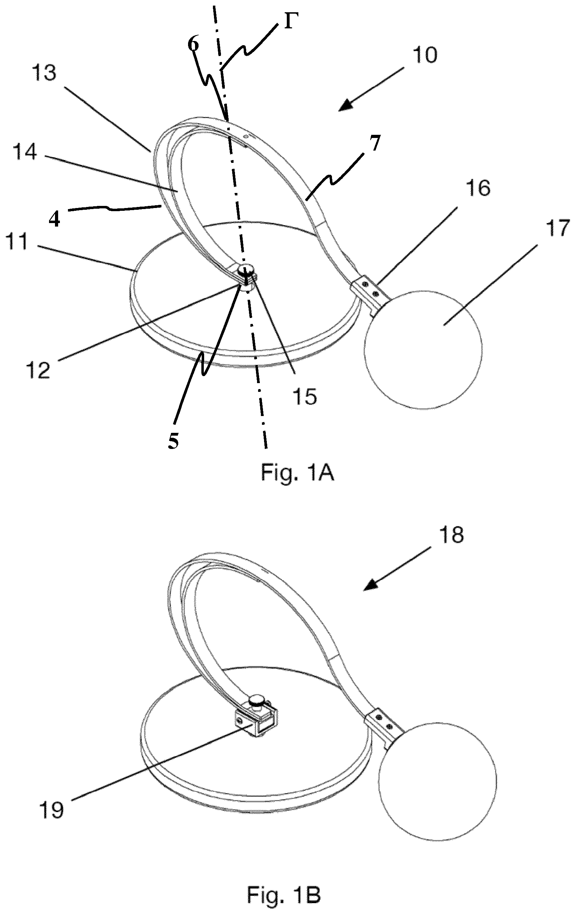

As shown in figure 1, the device 10 for practicing ball kick-ups 17 according to the invention comprises a bearing base 11, a vertical rotational axis Γ, an arm 13 that is rotatably mounted on said axis Γ, a ball 17 attached to the end of the arm 13, and the arm 13 consists of a first profile having a first section 4 that is substantially circular or elliptical, the first edge 5 or lower edge thereof being provided with means for attaching to the axis Γ and the second edge 6 or upper edge thereof being aligned with the axis r and constituting the highest point of the arm 13; and a second section 7 tangent to the first section 4 so as to be located on the other side of the rotational axis Γ, relative to the first section 4, the ball 17 being attached to the other end of the second section 7 so as to be raised relative to the bottom surface of the base 11.

According to an especially preferred embodiment, the device comprises a curved reinforcement profile 14 with a greater curvature than the first section 4 of the first profile, this reinforcement profile 14 being internally connected to the lower and upper edges of the first section 4. In this case, the reinforcement profile 14 is arranged on the vertical plane that contains the arm 13 and on the same side as the first section 4 with respect to the axis Γ.

The main components of the object of the invention are described one by one below.

### Base

The main function of the base 11 is to provide mechanical stability to the tool when it is in use. Several factors such as durability, environmental sustainability, cost of material, weight and marketing are important when selecting the material. If the product is used in indoor spaces, hard materials such as metal or wood require soft materials such as rubber so as to not damage the floor.

The shape of the base 11 is relatively arbitrary and depends on the functional nature and marketing requirements of the product. If the base 11 is not secured to the ground with suction cups or other attachment elements, a circular base 11 will provide suitable stability due to the rotational movement of the ball and the continuous load thereof against the base 11. However, other more complex shapes 50 may provide suitable stability, represent a specific brand and enable the device 51 to be fastened to the ground with other securing elements. Furthermore, all the embodiments of the tool are more stable if the weight is distributed over the entire perimeter of the base 11 or the weight is concentrated at the center around the rotational axis.

The size of the base 11 presents a compromise between stability and the amount of space the product takes up in the place where it is used. The stability tests indicate that the base 11 should be at least 30 centimeters in diameter in order to support the weight of small-sized balls (size 3) and the ball being kicked by young players. The base may be bigger depending on the stability one wishes to obtain, the size of the ball to be used, the weight, and the force provided by the player's kick. The preferred mechanism has a base 11 of approximately 40 centimeters in diameter although the maximum stability is obtained with a diameter of 53 centimeters.

### Rotational bearing and shaft

The function of the bearing 12 is to provide a smooth rotational movement of the ball around the base 11, thus returning the ball to the player when it is kicked. Ideally the friction of the bearing 12 must be minimal in order to provide a kick that is as real as possible. One or more bearings may be used to implement this function. Although there are many rotational technologies, those that adapt to the rotational forces are the most appropriate for this type of soccer training tool. The bearing or bearings 12 (preferably two) is or are coupled to a shaft that turns with the arm 13 which is attached to a ball 17. The material of the shaft must be resistant, such as steel or aluminum for example. In the perfect scenario, the best versions of the tools were produced with shafts made with metal materials with a diameter of 0.65 centimeters or 2.54 centimeters. Larger sizes may be used, although they are more expensive.

### Arm

The unique shape of the arm 13 that secures the ball is the key of the invention for providing the player with suitable feedback on the quality of the kick. The arm 13 secures the ball 17 without touching the ground 21 in a standard stop position. With the adjustment mechanism 36 (see below), the ball 17 may touch the ground when stopped if the player desires.

With the aim of providing the player with suitable feedback, the ball 17 must be capable of deviating from the horizontal plane (e.g. parallel to the ground) in order to make it easier for the ball to return to the ground, retaking the resting position when the kick lifts the ball 17 upwards. This feature of the ball 17 returning to its natural position is one of the elements that other devices that already exist on the market do not have. In these devices with much more rigid arms and less counterweight, gravity makes the ball 17 return to its natural position, and it never has a position lower than the natural position since the movement thereof is limited by the bottom portion. From this position, if a player kicks the ball 17 at a point that is above the center line of the ball, the ball does not move downwards as hoped but rather it lifts up immediately because the ball 17 is in the lower limit of the movement range during the impact. This is contrary to the natural movement of a ball 17 in soccer for ball kicks above the ground.

Unlike the art previously described [US7811183 Ohle] where the arm is a straight and rigid structure, the present invention is flexible on an axis 30, rigid on the rotational axis 20 and has a shape that enables the ball 17 to perform flights 30 in both upwards and downwards directions.

This characteristic must not be confused with the previously described art where the ball is balanced with a counterweight system [US20130337945]. There is another version of this technology where the movement of the ball is only limited in the upwards and downwards directions without any type of rotation. In this version, the mechanism does not rotate and the tool is used for doing kick-ups with the ball. If the rotation is enabled, an upwards and downwards kick movement is achieved with a different mechanism and a different flight style.

The specific shape and flexibility of the lateral arm 13 are related to the weight of the ball and the rocking effect desired by experts. If the player performs the kick with technique and accuracy, the ball 17 smoothly rotates around the rotational axis without rocking. If the player performs the kick correctly in the center, the ball smoothly rotates rocking upwards and downwards horizontally to the ground. If, on the other hand, the player performs a bad kick that completely deviates from the center, the arm 13 acts as a spring force in the vertical movement, causing rocking during the flight of the ball 17 when it rotates to return to the player. This rocking 30 is a key element in the player's feedback to know that the ball 17 has not been kicked correctly.

The material of the arm 13 must adapt to the following variables: cost, weight, size and level of rocking desired. In the tool that has given the best results, the arm 13 is made of aluminum due to its great strength against weight and its reasonable cost (compared to titanium for example). Aluminum, steel, plastic or fiber are all examples of materials that may be used to manufacture the arm 13.

In a preferred embodiment, a single arm 13 is used as shown in Fig. 9. In an alternative embodiment shown in Fig. 1A and 1B, two curved arms (or the arm and an arm support) are provided, where one acts as an absorber 14 of excessive rocking. More arm supports may be added for rocking or aesthetic reasons. The length of the arm 13 is established depending on the travel time desired with a certain kick force. If the arm 13 is very short, the ball 17 will return to the player too quickly, making it harder for the player to prepare for the next kick. If it is too long, the tool will be more unstable due to the weight of the ball 17 and the kick force. In the preferred embodiment, the length of the arm 13 may be within a range of 0.6 to 1 m before being given the final shape.

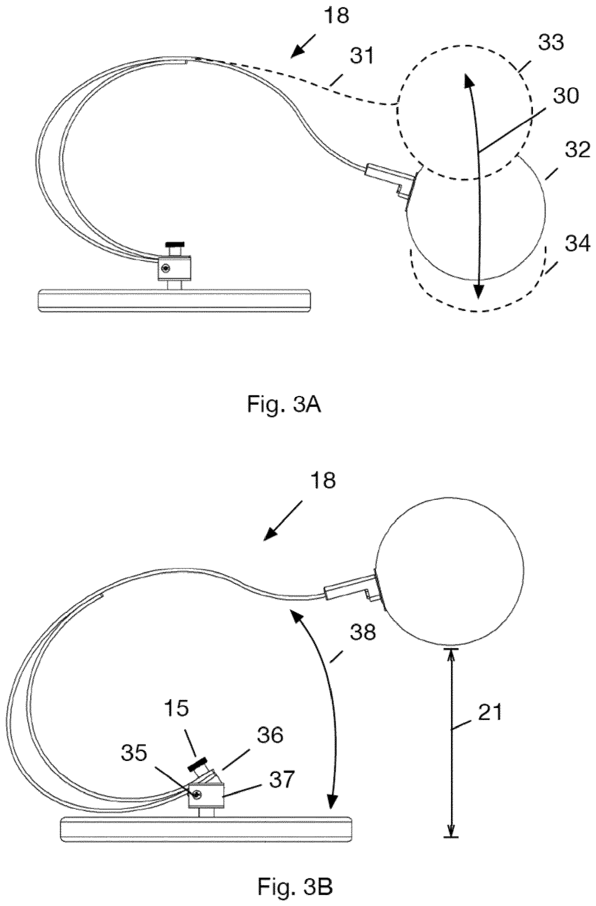

In a preferred embodiment, the transverse cross section of the arm 13 and of the arm supports 14 is asymmetrical and rectangular or in the shape of rounded rectangles with the horizontal side being longer than the vertical side. Similarly to a beam, this shape is rigid at the rotational axis, producing a smooth movement with no restrictions 20 around the base but flexible at the horizontal axis in order to enable the ball 17 to move upwards and downwards (Fig. 3A) if the player does not perform the kick correctly. The same efficiency may be obtained with a symmetrical transverse cross section (for example, circular) but the cost of the materials will be greater.

The ratio between the length and width of the transverse cross section of the arm is approximately 4:1 for the desired mechanical efficiency. The exact dimensions depend on the properties of the materials and the manufacturing stages, but are approximately 0.65 to 1 centimeter wide and 0.6 centimeters thick. The thickness of the arm is critical for creating the right feel during kicks and during off-centered kicks. Steel is also suitable as a material for the arm. For similar transverse cross sections, the arm made of steel will be more rigid and heavier, which will be noticed in the kicks.

### Additional vertical movement mechanism

In some cases, an additional flying movement 21 of the ball 17 is desired when it is kicked upwards. This function is not necessary in the downwards direction since the ball is clearly touching the ground. One way of obtaining this function, as shown in Figs. 1B, 3A and 3B, is the addition of a hinge 35 that enables the ball's movement to be increased, as shown in Fig. 3B. The hinge 35 may be directly mounted on the rotational bearing 12 and act as a balance or compensation and increases the range of movement in one direction.

### Height adjustment mechanism of the ball

This mechanism enables the height of the ball 17 to be adjusted at a certain distance from the ground. This mechanism may be incorporated in order to carry out specific training (for example, goalkeeper or volley kicks) or for aesthetic reasons. The height increase of the ball 17 not only enables the player to practice other kicking styles but also carry out training exercises for the goalkeepers.

There are other techniques [US20130337945] that enable the height of the ball 17 to be adjusted by adjusting the distance of a counterweight 61 (opposite the ball 17) of the axis of the vertical support. However, this technique requires specific adjustments and they may be difficult for the player.

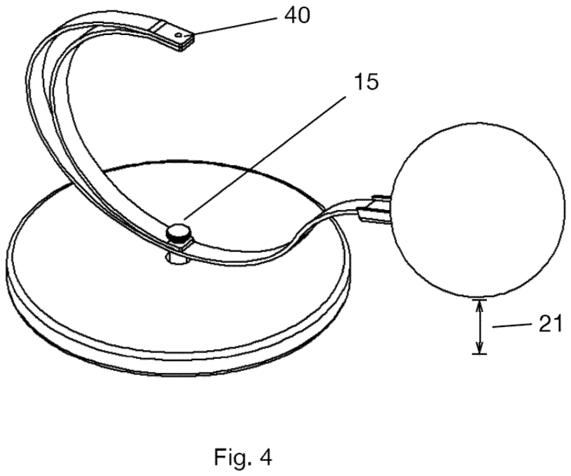

The mechanism of the present invention enables the height of the ball to be adjusted via a shaft with a button 15 that increases or decreases the distance of the ball 17 from the ground 21 when it is turned. Turning the button 15 threads a screw that presses against a fixed portion of the device 37 and modifies the height of the ball 17. The unique element of the preferred embodiment is the ability to rotate the arm 13 in order to move the ball 17 to a new height 21, as shown in Fig. 4. Here the button 15 is loosened from the support 40 thereof, the arm 13 is turned upside down, and the button 15 is attached once again in order to connect the arm 13 to the rotational bearing 12.

There are other well-known techniques in this field for modifying the height of the ball.

### Return mechanism (not shown)

The return mechanism enables the ball 17 to return to the player without the need for it to rotate around the axis. This mechanism enables the kick to be repeated with the same leg or with different legs successively. The ball returns to the player on the same side as it was kicked. There are many techniques for carrying out this movement: from a rubber band hooked between the base 11 and the rotational axis, a spring that fights and counteracts the rotational movement of the arm 13, or a rigid or semi-rigid wall placed in the path of the ball 17 so that it bounces and returns to the player.

### Ball and arm attachment means

The final components for carrying out the invention include a ball and a mechanism for attaching the ball 17 to the rotating arm 13. A variety of mechanisms for attaching the ball are described in the prior art, which are in the public domain.

### Rotation sensor and electronic module

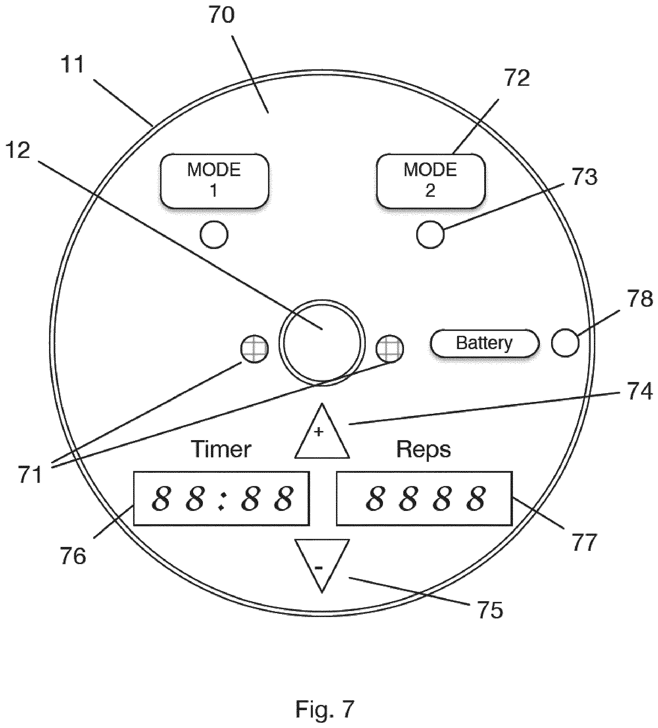

A unique characteristic of the present invention is, as shown in Fig. 7, the ability to detect, count and time the training activities. Different modules 72 or sets may be configured by the user or assisted by software incorporated into the tool in order to improve functionality. These elements will probably cause the players to be more interested in carrying out more exercises and mean that the product is used more often.

The device 70 may be powered through electricity, photocells for use outside or conventional batteries or rechargeable batteries. Rechargeable batteries are the preferred mechanism because they are simple and enable the product to be used in indoor spaces where there is poor lighting. Recharging can be carried out through a computer connection or through conventional chargers with plugs (not shown).

One of the key elements is the ability to detect both the rotation of the ball 17 in relation to the base 11 and the number of kicks performed. These events may be counted, timed and shown through an electronic module incorporated inside the product or as an external element. Although it is theoretically possible to make the module rotate, the information shown by the module is easier to read if it is secured to the fixed base 11. A mobile telephone may be used to detect the rotation, show information on a screen, capture data and transmit it to other electronic devices.

The sensor for detecting the rotation may be carried out with technologies such as magnetic, optical or photographic detection.

The preferred technology is magnetic sensors 71 due to their environmental robustness in the devices that may be used in outdoor spaces. A magnet is found in any part of the rotational structure of the product and one or more magnetic sensors are found in the electronic module around the base 11. When the magnet in the rotating element passes the sensor, an event may be registered and timed. Analyses can be run using integrated software to determine the rotation direction, the time between events, calculate the speed of the ball and count and show the number of repetitions 77. The electronic elements may also combine the duration of the activities 76 and the number of repetitions to create competition games between players and see who can perform more kicks in a certain time, as well as tracking efficiency during different training sessions.

The training information may be saved and sent by the electronic module either wirelessly or wired to other electronic devices.

The optical sensor is very common technology in the field of engineering but it has not be selected in the preferred device due to the high cost of the protective casing of the sensor/detector to protect it from the weather, dirt and sand. The photographic sensor through a mobile device is an alternative to the previously described system. The technology requires software that analyses the video image of the kick or the rotation of the ball 17. A mobile device or computer may carry out the previously described remaining analyses.

### Swivel joint between the ball and arm

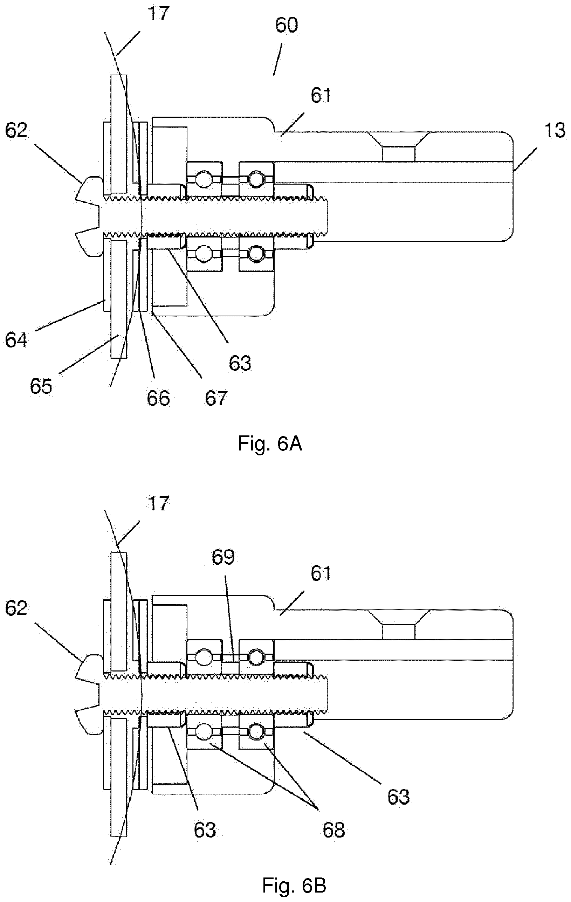

The components of the embodiment provided with a rotational attachment between the ball and arm include a ball 17 and means for attaching 60 the ball 17 to the rotating arm 13. Figure 6A shows an embodiment of the attachment of the ball. Here the ball 17 is attached to a piece 61 that is attached to the arm 17. The ball is attached to the piece 61 via a set of components that include a screw by way of threaded shaft 62, flat washers 65, 66, 67 and a nut 63. The washers 64 and 65 are inside the ball 17 and lock the wrapping material of the ball onto the components on the outside of the ball. The nut 63 holds the components by compression and the thread of the screw provides means for coupling the ball assembly to the piece 61 and lastly to the arm 13.

The sequence of materials and geometric relationships of the flat washers 64, 65, 66, 67 is important to reliably hold the ball and distribute the stresses of the kicked ball over a greater area. The washer 64 is made of a rigid material but it has a smaller diameter than the adjacent washer 65. The adjacent washer 65 is made of a flexible material, such as rubber, and has a greater diameter in order to protect the ball from the hard edge of the first washer 65. On the outside of the ball, the materials are arranged in reverse order with the softest washer 66 arranged closest to the ball. A nut 63 compresses the rigid washer 67 and the flexible washer 66 to fix the ball.

In the state of the art, many other attachment means, such as US7527567 for example as, are described. However, in contrast with US7527567, owned by Ohle, the present invention does not require spherical cap-shaped pieces to facilitate the attachment of the ball.

The possibility of the ball 17 rotating on itself with respect to the arm provides a more realistic reaction to the player's kick. In several techniques that are well known by players, the ball 17 can be made to spin in one direction or another. The capacity of the ball to spin also reduces the stress on the mechanism in the assembly thereof in two ways, which increases the useful life of the device. Firstly, spinning absorbs energy from the kick and therefore dissipates stresses that would otherwise be absorbed by the attachment mechanism of the ball. Secondly, spinning means that the impact area on the outside of the ball is random, which increases the useful life of the ball.

A mechanism to achieve a ball that may spin is shown in figure 6B. In this mechanism, the screw 62 that projects from the ball does so sufficiently so as to fit into bearings 68 that insulate the screw, and therefore the ball, from the attachment piece 61. This mechanical insulation enables the ball assembly to spin with respect to the piece 61 and also with respect to the arm 13. Furthermore, there is a separator 69 arranged between the bearings 68 to couple the inner portions of the bearings 68 and that enable the use of radial ball bearings.

Despite the fact that reference has been made to a specific embodiment of the invention, it is evident for a person skilled in the art that numerous variations and changes may be made to the device described, and that all the aforementioned details may be substituted by other technically equivalent ones, without detracting from the scope of protection defined by the attached claims.

## Claims

1. A device (10) for practicing ball kick-ups (17), comprising a bearing base (11), a vertical rotational axis (Γ), an arm (13) that is rotatably mounted on said axis (Γ), a ball (17) attached at the end of the arm (13), **characterized in that** the arm (13) consists of a first profile having a first section (4) that is substantially circular or elliptical, the first edge (5) or lower edge thereof being provided with means for attaching to the axis (Γ), and the second edge (6) or upper edge thereof being aligned with the axis (Γ) and constituting the highest point of the arm (13); and a second section (7) tangent to the first section (4) such as to be located on the other side of the rotational axis (Γ), relative to the first section (4), the ball (17) being attached to the other end of the second section (7), so as to be raised relative to the bottom surface of the base (11).

2. The device according to claim 1, which comprises a curved reinforcement profile (14) with a greater curvature than the first section (4) of the first profile, this reinforcement profile (14) being internally connected to the lower and upper edges of the first section (4).

3. The device according to claim 2, wherein the reinforcement profile (14) is arranged on the vertical plane that contains the arm (13) and on the same side as the first section (4) with respect to the axis (Γ).

4. The device according to any of the preceding claims, wherein the upper edge (6) of the first section (14) has means for being fitted onto the axis (Γ), such that it is possible to arrange the arm (13) upside down to obtain a different ball (17) height.

5. The device according to any of the preceding claims, wherein the second section (7) has a bending point in the middle portion thereof, such that the arm (13) has an overall question mark shape.

6. The device according to any of the preceding claims, wherein the profiles have a rectangular cross section of 25 mm wide and 6 mm high.

7. The device according to any of the preceding claims, wherein the center of gravity of the ball and arm assembly is arranged close to the axis (Γ).

8. The device according to any of the preceding claims, wherein the center of the ball is located between 40 and 50 cm away from the axis (Γ) and between 12 and 18 cm away from the bottom surface (11) of the base.

9. The device according to any of the preceding claims, wherein the bottom of the base comprises non-slip legs.

10. The device according to any of the preceding claims, wherein the arm is a metal, laminated wood, plastic or composite material profile.

11. The device according to any of the preceding claims, wherein the base is metal, wood, plastic or composite material.

12. The device according to any of the preceding claims, which comprises a turn counter and a stopwatch, means for determining the turns or back-and-forth movements of the arm per unit time, and means for displaying these turns or back-and-forth movements per unit time.

13. The device according to any of the preceding claims, which comprises an adjustment mechanism for the arm inclination in the link between the arm and the axis.

14. The device according to any of the preceding claims, wherein the ball is integral to the arm (13).

15. The device according to any of claims 1 to 13, wherein the attachment (60) between the ball (17) and the arm (13) is rotational, such that the ball (17) may rotate on itself on an axis that is substantially parallel to the end of the arm (13).

16. The device according to claim 15, wherein the rotational attachment (60) comprises a rotational shaft (62) integral to the ball (17), a piece (61) for receiving the rotational shaft (62) integral to the arm (13) and provided with an opening to house the shaft (62), the rotational shaft (62) being mounted on the opening with the interposition of two ball bearings (68).
